# EUROPEAN PATENT APPLICATION

(11) **EP 4 242 264 A1**
(43) Date of publication of application: **13.09.2023**
(21) Application number: 22160704.7
(22) Date of filing: 08.03.2022
(51) Int. Cl.: C08L 69/00

(54) **AUTOMOTIVE INTERIOR PART WITH LOW ODOR**

(71) Applicant: SABIC Global Technologies, B.V., 4612 PX Bergen op Zoom (NL)
(72) Inventor: Li, Sijun, 6160 GA Geleen (NL); Di, Xinjun, 6160 GA Geleen (NL)
(74) Representative: Sabic Intellectual Property Group

(57) **Abstract**

The present invention relates to an automotive interior article comprising or consisting of a thermoplastic composition, said composition comprising, based on the weight of the composition, (A) from 85 - 99 wt.% of aromatic polycarbonate, (B) from 1.0 - 10 wt.% of un-modified polyolefin elastomer, (C) from 0.1 - 5 wt.% of a copolymer comprising ethylene and glycidyl (meth)acrylate moieties, (D) from 0 - 5 wt.% of further component(s), wherein i) the sum of components (A) - (D) is 100 wt.%, ii) component (D) does not comprise polyester, iii) the thermoplastic composition is selected to have a sensory impression of smell determined in accordance with VDA 270-B3 of at most 3.0.

## Description

The present invention relates to an automotive interior article comprising or consisting of a thermoplastic composition.

The use of thermoplastic compositions in automotive interior applications is well known in the art per se and the formulation depends on many factors such as in particular the processability of the material and the mechanical properties such as stiffness and the toughness.

Blends of polycarbonate and one or more impact modifiers are known to the skilled person. Typically an acrylonitrile-butadiene-styrene copolymer is used for that the purpose, such blends being referred to as PC/ABS blends or PC/ABS in short.

While such blends typically are capable of meeting all the requirements in terms of mechanical and rheological properties the present inventor shave found that PC/ABS blends tend to generate smell as a result of the slow release of low molecular weight materials that are contained on thermoplastic composition and accordingly in the article. In particular for interior automotive applications this smell is undesirable.

WO 2011/078138 discloses a polycarbonate resin composition and a molded product made thereof which have excellent impact resistance, flexural strength, and flowability, which do not exhibit delamination after being molded, which have high chemical resistance, and which have improved flame-retardant properties. The disclosed polycarbonate resin composition is prepared by melt-kneading: 100 parts by mass of a resin component composed of (A) 60-95% by mass of an aromatic polycarbonate resin having a viscosity-average molecular weight of 16000 to 35000, (B) 1-40% by mass of a polyolefin-based resin and/or a polyolefin-based elastomer which have 3-30% by mass of an epoxy-group-containing compound or a glycidyl-group-containing compound added thereto, and (C) 0-39% by mass of a polyolefin-based resin (other than the polyolefin-based resin in the component (B)); (D) 0.001 to 1 part by mass of at least one type of compound selected from the group consisting of aliphatic amine salts, aromatic amine salts, ammonium hydroxide, and hydroxyl amine salts; (E) 3 to 40 parts by mass of a phosphorus-based flame retardant and/or a halogen-based flame retardant; and (F) 0.05 to 5 parts by mass of a fluorine-containing polymer. The disclosed molded product is made of said polycarbonate resin composition.

US 2016/0297963 discloses a composition comprising a blend of a plurality of polymers including: a) from about 40 weight percent to about 98 weight percent of one or more carbonates polymers; b) from about 0.1 weight percent to about 10 weight percent of one or more compatibilizing agent including one or more olefins; and c) from about 0.1 weight percent to about 10 weight percent of one or more olefinic elastomers, wherein the olefinic elastomer is a copolymer including two or more α-olefins and has a crystallinity of less than 30 percent; wherein the total concentration of the α-olefins of the olefinic elastomer is from 95 weight percent to 100 weight percent based on the total weight of the olefinic elastomer, and wherein the compatibilizing agent is selected from the group consisting of a copolymer including or consisting essentially of an acrylate monomer and one or more a-olefins, a copolymer including or consisting essentially of acrylic acid monomer and one or more α-olefins, an oxazoline functional olefin, a copolymer including or consisting essentially of one or more alkylacrylic acid monomers and one or more a-olefins, a copolymer or terpolymer including or consisting essentially of glycidyl methacrylate and an α-olefin, a copolymer including maleic anhydride and one or more a-olefins, and a graft polymer having a backbone including, consisting essentially of, or consisting entirely of one or more α-olefins and a functional graft; wherein the functional graft is a maleic anhydride, an acrylate, an acrylic acid, an oxazoline, or a glycidyl-methacrylate, or a combination thereof; wherein the total concentration of the olefins in the compatibilizing agent is from about 10 weight percent to less than 95 weight percent based on the total weight of the compatibilizing agent; and wherein the total concentration of the carbonate polymer, the compatibilizing agent, the olefinic elastomer, any polyester, any silicone elastomer, and any additives is more than 95 weight percent, based on the total weight of the composition.

US 5,994,467 discloses a polymer blend composition comprising, in admixture: (a) a polycarbonate in an amount from about 40 to about 96 parts by weight; (b) a substantially linear ethylene polymer or a linear ethylene polymer in an amount from about 1 to about 50 parts by weight, which has (i) a density of less than about 0.93 g/cm³, (ii) a molecular weight distribution, M_{w}/Mₙ, of less than about 3.0 and (iii) a Composition Distribution Branch Index of greater than 50 percent; (c) an olefinic epoxide-containing copolymer in an amount from about 0.5 to about 10 parts by weight; and (d) a polyester in an amount from about 0.5 to about 7 parts by weight; said parts by weight being based on 100 weight parts components (a), (b), (c), and (d). While this reference discloses that the compositions may be used for automotive applications no mention is made about the sensory impression of smell.

It is an object of the present invention to provide a thermoplastic composition that combines, in particular in comparison with PC/ABS, comparable or improved mechanical and rheological properties, yet with an improved, i.e. reduced, smell.

More generally it is an object to provide for a thermoplastic composition for use in automotive interior applications that has good impact properties and an improved, i.e. reduced, smell.

At least one of these objects is met, at least in part in accordance with the present invention which is directed at an automotive interior article comprising or consisting of a thermoplastic composition, said composition comprising, based on the weight of the composition,
(A) from 85 - 99 wt.% of aromatic polycarbonate,
(B) from 1.0 - 10 wt.% of un-modified polyolefin elastomer,
(C) from 0.1 - 5 wt.% of a copolymer comprising ethylene and glycidyl (meth)acrylate moieties,
(D) from 0 - 5 wt.% of further component(s),
wherein
- the sum of components (A) - (D) is 100 wt.%,
- component (D) does not comprise polyester,
- the thermoplastic composition is selected to have a sensory impression of smell determined in accordance with VDA 270-B3 of at most 3.0.

### Polycarbonate (A)

The thermoplastic composition for the automotive interior article comprises from 85 - 99 wt.%, preferably from 90 - 95 wt.% of aromatic polycarbonate.

Aromatic polycarbonates are generally manufactured using two different technologies. In a first technology, known as the interfacial technology or interfacial process, phosgene is reacted with a bisphenol, typically bisphenol A (BPA) in a liquid phase. Another well-known technology is the so-called melt technology, sometimes also referred to as melt transesterification or melt polycondensation technology. In the melt technology, or melt process, a bisphenol, typically BPA, is reacted with a carbonate, typically diphenyl carbonate (DPC), in the melt phase. Aromatic polycarbonate obtained by the melt transesterification process is known to be structurally different from aromatic polycarbonate obtained by the interfacial process. In that respect it is noted that in particular the so called "melt polycarbonate" typically has a minimum amount of Fries branching, which is generally absent in "interfacial polycarbonate". Apart from that melt polycarbonate typically has a higher number of phenolic hydroxy end groups while polycarbonate obtained by the interfacial process is typically end-capped and has at most 150 ppm, preferably at most 50 ppm, more preferably at most 10 ppm of phenol hydroxyl end-groups.

In accordance with the invention, it is preferred that the aromatic polycarbonate comprises or consists of bisphenol A polycarbonate homopolymer (also referred to herein as bisphenol A polycarbonate). Preferably, the aromatic polycarbonate of the invention disclosed herein comprises at least 75 wt. %, preferably at least 80 wt. %, more preferably at least 90 wt.%, more preferably at least 98 wt.% of bisphenol A polycarbonate based on the total amount of aromatic polycarbonate. More preferably, the aromatic polycarbonate in the composition essentially consists or consists of bisphenol A polycarbonate, essentially consisting meaning that the aromatic polycarbonate comprises at least 99 wt.% of bisphenol A polycarbonate. It is preferred that the aromatic polycarbonate has a weight average molecular weight (Mw) of 15,000 to 60,000 g/mol determined using gel permeation chromatography with polycarbonate standards. Preferably the Mw of the aromatic polycarbonate is from 30,000 - 65,000 g/mol.

In an aspect, the polycarbonate is an interfacial polycarbonate.

In another aspect, the polycarbonate is a melt polycarbonate, preferably a melt polycarbonate essentially consisting or consisting of bisphenol A polycarbonate.

In yet another aspect the polycarbonate is a mixture of from 20 - 80 wt. % or 40 - 60 wt.% of interfacial polycarbonate and from 80 - 20 wt. % or 60 - 40 wt.% of melt polycarbonate, based on the weight of the aromatic polycarbonate.

The polycarbonate may be a mixture of two or more polycarbonates differing in melt volume rate (i.e. in molecular weight). The polycarbonates of the mixture may both be a bisphenol A polycarbonate homopolymer.

In another aspect the aromatic polycarbonate comprises a polycarbonate copolymer comprising structural units of bisphenol A and structural units from another bisphenol.

The aromatic polycarbonate (A) preferably has a melt flow rate of from 3 - 50, such as from 5 - 40, preferably 10 - 40, more preferably from 15 - 40 even more preferably from 20 - 35 g/ 10min as determined in accordance with ASTM D1238 (300 °C, 1.2 kg). The melt flow rate of the polycarbonate (A) may be from 25 - 35 g/10 min. In case the polycarbonate (A) is a mixture of two or more polycarbonates then this requirement applies to the mixture and accordingly does not limit the melt flow rates of the individual polycarbonates. It is however preferred that each individual polycarbonate in such a mixture has a melt volume flow rate within the ranges defined above.

Aromatic polycarbonates are known to the skilled person per se.

### Un-modified polyolefin elastomer (B)

The un-modified polyolefin elastomer is a polyolefin elastomer which does not contain any moieties other than olefinic moieties. Accordingly the un-modified polyolefin elastomer does not comprise any functional groups such as or example maleic anhydride groups, epoxy groups, acrylate groups, glycidyl groups and the like.

It is preferred that the in-modified polyolefin elastomer comprises a polyethylene copolymer having moieties derived from 1-butene, 1-hexene or 1-octene and wherein the elastomer has a density of from 855 - 910 kg/m3, as determined in accordance with ASTM D792 (2008). The melt flow rate of the elastomer is preferably from 0.5 - 35 g/10 min, as determined in accordance with ASTM D1238 (2013) at a temperature of 190°C under a load of 2.16 kg. More preferably the melt flow rate is from 10 - 35, 15 - 35, 25 - 35 g/10 min.

It is preferred that the un-modified polyolefin elastomer comprises a polyethylene copolymer having moieties derived from 1-hexene or 1-octene, more preferably 1-octene. The un-modified polyolefin elastomer preferably has a density of from 870 - 910 kg/m3, preferably from 880 - 910 kg/m3, more preferably from 890 - 910 kg/m3, even more preferably from 895 - 905 kg/m3.

The amount of elastomer (B) in the thermoplastic composition is from 1.0 - 10 wt.%, preferably from 2 - 8 wt.%, more preferably from 3 - 6 wt.%, based on the weight of the thermoplastic composition.

Unmodified polyolefin elastomers are known to the skilled person per se.

### Copolymer (C)

The copolymer (C) is an olefinic epoxide-containing copolymer, more in particular a copolymer comprising ethylene and glycidyl (meth)acrylate moieties.

Copolymer (C) preferably has a glass transition temperature (Tg) less than 0° C as determined by differential scanning calorimetry (DSC). The copolymer is formed from and comprising in polymerized form (i) one or more ethylenically unsaturated monomers not carrying an epoxide group and comprising ethylene, and (ii) glycidyl (meth)acrylate.

Copolymer (C) is not limited strictly to only copolymers of ethylene and glycidyl(meth)acrylate and may contain further moieties from other ethylenically unsaturated monomers, typically not carrying an epoxide group.

By way of example such further moieties may be based on one or more of the following: alkenes, preferably C₃ to C₂₀, more preferably C₃ to C₈, and most preferably C₃ to C₆ straight or branched chain alkenes or alkadienes such as propylene, butylene, octene, isopropylene, isobutylene, or conjugated dienes such as butadiene; C₁ to C₈ alkyl acrylates such as methyl-acrylate, ethyl-acrylate, butyl-acrylate, hexyl-acrylate or hydroxy-ethyl-acrylate; C₁ to C₈ alkyl methacrylates such as methyl-methacrylate or hexyl-methacrylate; other esters of the C₁ to C₆ aliphatic or cycloaliphatic alcohols such as the esters of C₁ to C₄ aliphatic or cycloaliphatic alcohols and acrylic or methyacrylic acid, olefinically unsaturated esters of carboxylic acids such as, vinyl acetate, vinyl propionate and vinyl benzoate; vinyl and vinylidene aromatic compounds such as styrene, vinyl toluene, and α-methyl styrene, optionally said vinyl and vinylidene aromatic compounds may bear a polar, electronegative group or functionality such as a halogen group, or an organic group having a double or triple bond such as phenyl, carboxy, cyano or the like; or vinyl halide compounds and vinylidene halide compounds such as vinyl chloride, vinylidene chloride, and the like, or vinyl and vinylidene ethers, vinyl-methylether, vinyl-ethyl-ether and vinyl-isobutyl-ether; or a mixture of two or more of any of the foregoing.

The copolymer (C) is preferably selected from the group consisting of an ethylene glycidyl-methacrylate copolymer, an ethylene - propylene glycidyl-methacrylate copolymer, an ethylene methyl (meth)acrylate glycidyl-methacrylate copolymer, an ethylene - propylene methyl (meth)acrylate glycidyl-methacrylate copolymer and mixtures of at least two of the foregoing.

More preferably the copolymer (C) is a random copolymer of ethylene and glycidyl methacrylate, i.e. a copolymer consisting of ethylene and glycidyl methacrylate moieties.

The amount of glycidyl methacrylate in copolymer (C) is preferably from 2 - 20 wt.%, preferably 5 - 15 wt.% based on the weight of the copolymer (C).

The amount of copolymer (C) in the thermoplastic composition is from 0.1 - 5 wt.%, preferably from 0.5 - 4 wt.%, more preferably from 0.5 - 3 wt.% or 1 - 3 wt.%, based on the weight of the thermoplastic composition.

The melt flow rate of the copolymer (C) is preferably from 1 - 20 g/10 min as determined in accordance with ASTM D1238 at 190°C and a load of 2.16 kg.

### Further components

The thermoplastic composition comprised in or constituting the article according to the invention may comprise further components preferably selected from the group consisting of anti-oxidants, mould release agents, colorants, fillers, heat stabilisers, UV stabilisers, anti-microbial agents.

An example of a mould release agent is penta-erythritol tetra stearate.

Anti-microbial agents for example, include, but are not strictly limited to, elemental iodine (also called free iodine), hypohalites, haloamines, thiocyanogen, hypothiocyanite, silver ions, triclosan, antibiotics such as penicillin and amoxycillan, and rapromycin. Preferably, the anti-microbial agent is an iodine-based substance.

Typically the further components do not comprise any polymers.

### Thermoplastic composition

The thermoplastic composition does not comprise a polyester such as in particular poly-ethylene terephthalate or poly-butylene terephthalate. Thus in an embodiment the thermoplastic composition does not poly-ethylene terephthalate and/or poly-butylene terephthalate.

It is preferred that the thermoplastic composition does not comprise a polybutadiene polymer or copolymer, such as graft or block copolymers having a polybutadiene block and styrene or styrene copolymer blocks or grafts.

It is in particular preferred that the thermoplastic composition does not comprise one or both of a copolymer of styrene and acrylonitrile and a copolymer of acrylonitrile, styrene and butadiene.

It is preferred that the amount of copolymer (C) in the thermoplastic composition is from 0.5 - 3 wt.%, more preferably from 1 - 4 wt.% and the amount of elastomer (B) in the thermoplastic composition is from 2 - 8 wt.%, more preferably from 3 - 6 wt.%, based on the weight of the thermoplastic composition.

The thermoplastic composition preferably has, or is selected to have, a melt flow rate of from 5 - 40 g/10 min, preferably 8 - 35, 15 - 35 or more preferably 8 - 20 g/10 min determined in accordance with ASTM D1238 (300°C, 1.2 kg).

The thermoplastic composition is further preferably selected to have one or more of
- an Izod notched impact resistance at 23°C of at least 700 J/m determined in accordance with ASTM D256 on an notched injection moulded sample of 63.5 x 12.7 x 3.2 mm,
- an Izod notched impact resistance at 0°C of at least 650 J/m determined in accordance with ASTM D256 on a notched injection moulded sample of 63.5 x 12.7 x 3.2 mm,
- an Izod notched impact resistance at -20°C of at least 400 J/m, preferably at least 500 J/m determined in accordance with ASTM D256, on a notched injection moulded sample of 63.5 x 12.7 x 3.2 mm,
- a heat deflection temperature of at least 120, preferably at least 120 °C determined in accordance with using ASTM D648 under a load of 1.8 MPa and measured on an injection moulded sample of 127 x 12.7 x 32 mm,
- a tensile modulus of at least 2100 MPa as determined in accordance with ASTM D638 at room temperature (23°C),
- a VOC (C₅ - C₂₀) content of at most 0.1 ppm determined in accordance with VDA278,
- a SVOC (C₁₆-C₃₂) content of at most 0.15 ppm determined in accordance with VDA278,
- a combined amount of benzene, toluene, xylene, ethylbenzene and styrene of at most 0.1 ppm determined in accordance with VDA278.

While these properties of the thermoplastic composition are presented herein as a list it is to be understood that each property by itself represents a preferred feature for the thermoplastic composition as defined herein. Moreover it is to be understood that any combination between two or more of the above mentioned properties is to be considered as directly and unambiguously disclosed herein.

### Article

The article of the invention is an automotive interior article that is preferably obtained by a moulding process, preferably an injection moulding process.

The automotive interior article is preferably selected from the group consisting of instrument panels, cup holders, glove boxes, dashboards, dashboard carriers, door claddings, door fixtures, armrests, ash trays, sun covers, pillar cladding, seat cladding, boot cladding and parts used in heating, ventilation and/or air conditioning instruments.

While the present invention is not strictly limited to it the articles are preferably provided with a further layer for at most 75%, preferably at most 50 % such as from 1-40% of its surface area. Articles that are fully covered with either a coating, a plating layer, a foam layer or a layer comprising another thermoplastic material typically result in less odor species diffusing out of the article. Accordingly, once the outside surface of an article is covered with a further layer the sensory impression of smell may be reduced. This means that the articles according to the invention are in particular useful for applications where the article is not or only partially provided with such a further layer.

The present invention further relates to any vehicle comprising the article as disclosed herein, in particular a fuel-based, hybrid or fully electrical vehicle. Preferably the vehicle is an electrical car, bus or truck.

### Further aspects

In a further aspect the present invention relates to the use of an un-modified polyolefin elastomer as an impact modifier in aromatic polycarbonate for improving the impact resistance of the polycarbonate and maintaining a sensory impression of smell determined in accordance with VDA 270-B3 of at most 3.0.

### Measurements

**Table 1**

| | |
|---|---|
| Smell | The sensory impression of smell is measured in accordance with the VDA 270 standard. VDA 270 is a standard for a determining the odor of automotive articles, issued by "Verband der Automobilinindustrie e.V.". The determination takes places under supervision of a panel of at least three different people and the odor is classified in several classifications, i.e. from #1 (not perceptible) to #6 (intolerable). In the examples of the present invention a test panel of five people was used. |
| | The measurement applied herein is in accordance with VDA 270, October 1992. The outcome of the determination is reported with one digit accuracy using half steps, such as for example 3.0, 3.5 or 4.0. This number represents the average of the classifications by the members of the testing panel. The sensory impression of smell (odor) is provided based on determination according to VOA 270 B3 (1992) meaning that the sample size (Probekorpermenge) is according to variant B, meaning 20 +/- 2 cm3 (for a 1 liter vessel) or 60 +/- 6 cm3 (for a 3 liter vessel) and wherein the test is carried out according to variant 3, meaning at a temperature of 80 +/- 2 °C for a storage time (Lagerdauer) of 2h +/- 10 min. |
| | The VDA 270 B3 note is expressed in half points, following the requirements of this standard. |
| Impact resistance | Izod notched impact resistance was determined in accordance with ASTM D256 on an notched injection moulded sample of 63.5 x 12.7 x 3.2 mm and at 23°C, 0°C and -20°C. |
| Heat deflection temperature | The heat deflection temperature was determined in accordance with using ASTM D648 under a load of 1.8 MPa and measured on an injection moulded sample of 127 x 12.7 x 32 mm |
| Tensile modulus & tensile stress | The tensile modulus and tensile stress were determined in accordance with ASTM D638 at room temperature (23°C). |
| Volatile Organic Content (VOC) | The VOC (C₅ - C₂₀) content and the SVOC (C₁₆-C₃₂) content were both determined in accordance with VDA278. |
| | The combined amount of benzene, toluene, xylene, ethylbenzene and styrene was determined in accordance with VDA278 |
| | |

The present invention will now be elucidated based on the following non-limiting examples.

### Materials

**Table 2**

| Material | Description |
|---|---|
| A1 | BPA polycarbonate resin made by melt process with Mw of about 55000 as determined by means of GPC using polystyrene standards. |
| | Polycarbonate A1 has a melt volume rate (MVR) of about 27 cm3/10 min as determined in accordance with ISO 1133 (300°C, 1.2 kg) |
| A2 | BPA polycarbonate resin made by melt process with Mw of about 41000 as determined by means of GPC using polystyrene standards. |
| | Polycarbonate A2 has a melt volume rate (MVR) of about 27 cm3/10 min as determined in accordance with ISO 1133 (300°C, 1.2 kg) |
| B1 | Ethylene-1-octene polyolefin elastomer having a density of 0.868g/cm3 and a melt flow rate of 30 g/10 min (ASTM D1238, 2.16 kg, 190°C) |
| C1 | Random copolymer of ethylene and glycidyl methacrylate (GMA), commercially available as Lotader AX 8840 from Arkema and having a glycidyl methacrylate content of 8 wt.%, a melt flow rate of 5 g/10 min (ISO 1133, 190°C, 2.16 kg). |
| D1 | Hindered phenol, Irganox 1076. CAS No. 2082-79-3 |
| D2 | Tris(2,4-di-tert-butylphenyl)phosphite , stabilizer, CAS NO. 31570.04-4 available as Irgafos 168 |
| D3 | Pentaerythritol Tetrastearate |
| XCY620S | PC/ABS commercially availiable from SABIC as CYCOLOY RESIN XCY620S. |

### Experiments

**Table 3**

| Components | Unit | XCY620S | CE1 | CE2 | E1 |
|---|---|---|---|---|---|
| A1 | pbw | | 32 | 32 | 32 |
| A2 | pbw | | 65 | 65 | 65 |
| B1 | pbw | | | 3 | 3 |
| C1 | pbw | | | | 1 |
| D1 | pbw | | 0.21 | 0.21 | 0.21 |
| D2 | pbw | | 0.05 | 0.05 | 0.05 |
| D3 | pbw | | 0.27 | 0.27 | 0.27 |
| | | | | | |
| Properties | | | | | |
| MFR | g/10 min | 40 | 19.8 | 22.4 | 16.5 |
| HDT | °C | 108 | 122 | 122 | 122 |
| FlexMod FlexStress TensMod | MPa | 2300 | 2360 | 2220 | 2170 |
| | MPa | 86 | 103 | 95.4 | 92.2 |
| | MPa | 2100 | 2347 | 2194 | 2142 |
| TensStress | MPa | 60 | 58 | 55.5 | 54.9 |
| INI @ 23°C | J/m | 680 | 844 | 748 | 738 |
| INI Ductility @ 23°C | % | 100 | 100 | 100 | 100 |
| INI @ 0°C | J/m | 520 | 259 | 726 | 701 |
| INI Ductility @ 0°C | % | 100 | 20 | 100 | 100 |
| INI @ -10°C | J/m | 480 | 125 | 722 | 708 |
| INI Ductility @ -10°C | % | 100 | 0 | 100 | 100 |

| INI @ -20°C | J/m | 445 | 119 | 438 | 688 |
|---|---|---|---|---|---|
| INI Ductility @ -20°C | % | 100 | 0 | 40 | 100 |
| Odor(VDA270 B3) | | 4.0 | 3.0 | 3.0 | 3.0 |
| Benzene (VDA278) | ppm | 0.43 | ND | ND | ND |
| Toluene (VDA278) | ppm | ND | ND | ND | ND |
| Xylene (VDA278) | ppm | ND | ND | ND | ND |
| Ethylbenzene from VDA278 | ppm | ND | ND | ND | ND |
| Styrene from VDA278 | ppm | 0.56 | ND | ND | ND |
| VOC(C5-C20) from VDA278 | ppm | 1 | ND | ND | ND |
| SVOC(C16-C32) from VDA278 | ppm | 0.1 | 0.14 | 0.12 | 0.12 |
| | | | | | |

In the table above:
- the unit pbw means parts by weight
- MFR means the melt flow in accordance with ASTM D1238 at 300°C and 1.2 kg
- HDT means the heat deflection temperature
- FlexMod means the flexural modulus determined in accordance with ASTM D790 (1.27 mm/min, 100 mm span)
- FlexStress means the flexural stress at yield determined in accordance with ASTM D790 (1.27 mm/min, 100mm span)
- TensMod means the tensile modulus
- TensStress means the tensile stress
- INI means Izod Notched Impact at the designated temperature
- INI Ductility means the ductility at the designated temperature defined as the percentage out of 10 samples showing a ductile break.
- ND means "not detected"

**Table 4**

| Components | Unit | CE1 | E2 | CE3 | CE4 | CE5 |
|---|---|---|---|---|---|---|
| A1 | pbw | 32 | 32 | 32 | 32 | 32 |
| A2 | pbw | 65 | 65 | 65 | 65 | 65 |
| B1 | pbw | | 3 | 3 | 3 | 5 |
| C1 | pbw | | 3 | 5 | 7 | 5 |
| D1 | pbw | 0.21 | 0.21 | 0.21 | 0.21 | 0.21 |
| D2 | pbw | 0.05 | 0.05 | 0.05 | 0.05 | 0.05 |
| D3 | pbw | 0.27 | 0.27 | 0.27 | 0.27 | 0.27 |
| | | | | | | |
| Properties | | | | | | |
| MFR | g/10 min 19.8 | | 8.1 | 6.0 | 4.1 | 4.8 |
| HDT | °C 122 | | 121 | 121 | 119 | 120 |
| FlexMod FlexStress TensMod | MPa 2360 | | 2080 | 1980 | 1910 | 1920 |
| | MPa 103 | | 82.6 | 80.1 | 77.2 | 76.5 |
| | MPa 2347 | | 2025 | 1923 | 1858 | 1581 |
| TensStress | MPa 58 | | 52.7 | 57.1 | 56.4 | 54.7 |
| INI @ 23°C | J/m 844 | | 711 | 679 | 659 | 672 |
| INI Ductility @ 23°C | % 100 | | 100 | 100 | 100 | 100 |
| INI @ 0°C | J/m 259 | | 688 | 641 | 661 | 668 |
| INI Ductility @ 0°C | % 20 | | 100 | 100 | 100 | 100 |
| INI @ -10°C | J/m 125 | | 593 | 279 | 292 | 292 |
| INI Ductility @ -10°C | % 0 | | 100 | 0 | 0 | 0 |
| INI @ -20°C | J/m 119 | | 355 | 229 | 275 | 248 |
| INI Ductility @ -20°C | % 0 | | 40 | 0 | 0 | 0 |
| Odor(VDA270 B3) | 3.0 | | 3.0 | 3.5 | 3.5 | 3.5 |
| Benzene (VDA278) | ppm ND | | ND | ND | ND | ND |
| Toluene (VDA278) | ppm ND | | ND | ND | ND | ND |
| Xylene (VDA278) | ppm ND | | ND | ND | ND | ND |
| Ethylbenzene from VDA278 | ppm ND | | ND | ND | ND | ND |
| Styrene from VDA278 | ppm ND | | ND | ND | ND | ND |
| VOC(C5-C20) from VDA278 | ppm ND | | ND | ND | ND | ND |
| SVOC(C16-C32) from VDA278 | ppm 0.14 | | 0.12 | 0.12 | 0.12 | 0.11 |
| | | | | | | |

## Claims

1. Automotive interior article comprising or consisting of a thermoplastic composition, said composition comprising, based on the weight of the composition,
(A) from 85 - 99 wt.% of aromatic polycarbonate,
(B) from 1.0 - 10 wt.% of un-modified polyolefin elastomer,
(C) from 0.1 - 5 wt.% of a copolymer comprising ethylene and glycidyl (meth)acrylate moieties,
(D) from 0 - 5 wt.% of further component(s),
wherein
- the sum of components (A) - (D) is 100 wt.%,
- component (D) does not comprise polyester,
- the thermoplastic composition is selected to have a sensory impression of smell determined in accordance with VDA 270-B3 of at most 3.0.

2. The article of claim 1 wherein said article has a surface area and at most 50% of said surface area is provided with at least one further layer, preferably selected from a coating layer, a polymer layer, a plating layer or a combination of one or more of the foregoing.

3. The article of claim 1 or 2 wherein said article is obtained by injection moulding the thermoplastic composition.

4. The article of any one or more of claims 1 - 3 wherein said polycarbonate comprises at least 80 wt.%, preferably at least 90 wt.% more preferably at least 99 wt.% of bisphenol A polycarbonate.

5. The article of any one or more of claims 1 - 4 wherein the polycarbonate has a melt flow rate of from 5 - 40 g/ 10 min, preferably 15 - 35 g/ 10 min. determined in accordance with ASTM D1238 (300°C, 1.2 kg).

6. The article of any one or more of claims 1 - 5 wherein the thermoplastic composition has a melt flow rate of from 5 - 40 g/10 min, preferably 8 - 35, more preferably 8 - 20 g/10 min. determined in accordance with ASTM D1238 (300°C, 1.2 kg).

7. The article of any one or more of claims 1 - 6 wherein the un-modified polyolefin elastomer comprises a polyethylene copolymer having moieties derived from 1-butene, 1-hexene or 1-octene and having a density of ≥ 855 kg/m3 and ≤ 910 kg/m3, as determined in accordance with ASTM D792 (2008) and a melt flow rate of from 0.5 - 35 g/10 min, as determined in accordance with ASTM D1238 (2013) at a temperature of 190°C under a load of 2.16 kg.

8. The article of any one or more of claims 1 - 7 wherein the further component(s) is/ are selected from the group consisting of anti-oxidants, mould release agents, colorants, fillers, heat stabilisers, UV stabilisers, anti-microbial agents.

9. The article of any one or more of claims 1 - 8 wherein the copolymer comprising ethylene and glycidyl (meth)acrylate moieties is an ethylene glycidyl-methacrylate copolymer, an ethylene - propylene glycidyl-methacrylate copolymer, an ethylene methyl (meth)acrylate glycidyl-methacrylate copolymer, an ethylene - propylene methyl (meth)acrylate glycidyl-methacrylate copolymer and mixtures of at least two of the foregoing.

10. The article according to any one or more of claims 1 - 9, wherein said article is chosen from the group consisting of instrument panels, cup holders, glove boxes, dashboards, dashboard carriers, door claddings, door fixtures, armrests, ash trays, sun covers, pillar cladding, seat cladding, boot cladding and parts used in heating, ventilation and/or air conditioning instruments.

11. The article of any one or more of claims 1 -10 wherein the thermoplastic composition is further selected to have one or more of
- an Izod notched impact resistance at 23°C of at least 700 J/m determined in accordance with ASTM D256 on an notched injection moulded sample of 63.5 × 12.7 × 3.2 mm
- an Izod notched impact resistance at 0°C of at least 650 J/m determined in accordance with ASTM D256 on a notched injection moulded sample of 63.5 × 12.7 × 3.2 mm,
- an Izod notched impact resistance at -20°C of at least 400 J/m, preferably at least 500 J/m, determined in accordance with ASTM D256, on a notched injection moulded sample of 63.5 × 12.7 × 3.2 mm,
- a heat deflection temperature of at least 120, preferably at least 120 °C determined in accordance with using ASTM D648 under a load of 1.8 MPa and measured on an injection moulded sample of 127 × 12.7 × 32 mm,
- a tensile modulus of at least 2100 MPa as determined in accordance with ASTM D638 at room temperature (23°C),
- a VOC (C₅ - C₂₀) content of at most 0.1 ppm determined in accordance with VDA278,
- a SVOC (C₁₆-C₃₂) content of at most 0.15 ppm determined in accordance with VDA278,
- a combined amount of benzene, toluene, xylene, ethylbenzene and styrene of at most 0.1ppm determined in accordance with VDA278.

12. The article of any one or more of claims 1 - 11 wherein the article is comprised in or constitutes any one or more selected from the group consisting of instrument panels, cup holders, glove boxes, dashboards, dashboard carriers, door claddings, door fixtures, armrests, pillar cladding, seat cladding, boot cladding and parts used in heating, ventilation and/or air conditioning instruments.

13. Use of an un-modified polyolefin elastomer as an impact modifier in aromatic polycarbonate for improving the impact resistance of the polycarbonate and maintaining a sensory impression of smell determined in accordance with VDA 270-B3 of at most 3.0.

14. A fuel based or electrical vehicle comprising the article of any one or more of claims 1-12.

15. The vehicle of claim 14 wherein said vehicle is an electrical car, electrical bus or electrical truck.
